# DEMANDE DE BREVET EUROPEEN

(11) **EP 0 550 301 A1**
(43) Date de publication de la demande: **07.07.1993**
(21) Numéro de dépôt: 92403297.2
(22) Date de dépôt: 07.12.1992
(51) Int. Cl.: H04L 29/06, G09B 9/00, G09B 5/14

(54) **Procédé et dispositif de simulation de données dans un réseau informatique de télécommunication**

(30) Priorité: 13.12.1991 FR 9115514
(71) Demandeur: THOMSON-CSF, 75008 Paris (FR)
(72) Inventeur: Bogdanoff, Nicolas, F-92402 Courbevoie Cedex (FR); Faye, Jean-Pierre, F-92402 Courbevoie Cedex (FR); Guignard, Claude, F-92402 Courbevoie Cedex (FR)
(74) Mandataire: Benoit, Monique

(57) **Abrégé**

La présente invention concerne les simulations de données dans des réseaux informatiques de télécommunication.

Les réseaux en question comportent au moins deux simulateurs de données échangeant les données entre eux selon un protocole de communication déterminé, les simulateurs étant utilisés pour générer les données et/ou pour simuler des entités, c'est-à-dire des éléments du monde réel (véhicules ... ) ou des éléments du monde réel simulé.

Selon l'invention, le réseau informatique de télécommunication est utilisé pour faire transiter les messages entre entités et/ou opérateurs intervenant sur les simulateurs.

Une application très intéressante de l'invention concerne le domaine de l'entraînement collectif d'opérateurs de systèmes complexes fonctionnant en interactif.

## Description

La présente invention concerne les procédés et les dispositifs de simulation de données dans un réseau informatique de télécommunication du type comportant au moins deux simulateurs de données agencés pour échanger les données entre eux en mettant en oeuvre un protocole de communication déterminé, entre simulateurs, chaque simulateur simulant au moins en partie une entité et/ou étant utilisé par un opérateur pour générer lesdites données.

Par entité il convient d'entendre un élément de monde réel, comme par exemple un véhicule, qui est simulé par un ou plusieurs simulateurs. Une entité peut également être un élément du monde réel simulé, tel que par exemple un bâtiment ou un pont, pouvant changer d'apparence du fait de l'exercice de simulation.

Un protocole est un ensemble de conventions ou de règles qui définissent notamment le format, le séquencement, l'algorithme de détection des erreurs de transmission des données transférées, etc.

La présente invention trouve une application particulièrement importante, bien que non exclusive, dans le domaine de l'entraînement collectif d'opérateurs de systèmes complexes fonctionnant en interactif, et notamment dans le domaine dit domaine de la Simulation Interactive Distribuée (SID).

L'accroissement des besoins d'entraînement collectif dans les domaines civils et militaires a en effet été à l'origine d'un nouveau concept de simulation, dit Simulation Interactive Distribuée.

Ce concept est défini comme étant un exercice dans lequel des entités simulées, supportées par un ensemble de simulateurs interconnectés, sont capables d'interagir avec un environnement généré par un ordinateur.

On connaît déjà des systèmes mettant en oeuvre la Simulation Interactive Distribuée, dans un réseau informatique de télécommunication.

Des travaux sont notamment en cours pour l'établissement de standards dans le cadre des applications militaires.

A ce propos, on se reportera plus précisément au document intitulé "MILITARY STANDARD (DRAFT). Entity Information and Entity Interaction in a Distributed Interactive Simulation" -January 25, 1991- publié par : Institute for Simulation and Training - University of Central Florida, 12424 Research Park West, Suite 300, Orlando FL 32826, établi dans le cadre d'un contrat avec la DARPA (Department Advanced Research Project Agency). Ce document est ci-après appelé Document (I).

Dans les systèmes connus mettant en oeuvre la SID, le réseau informatique est exclusivement utilisé pour échanger, d'une part des informations de changement d'états, et d'autre part des données ou messages de données entre simulateurs.

Par message de données, il faut entendre une information de taille quelconque, c'est-à-dire dont le transfert est transparent vis à vis du format des données.

De tels systèmes présentent des inconvénients.

Ils obligent notamment à prévoir des liaisons physiques ou réelles entre opérateurs de simulateurs, pour transmettre des informations directement d'opérateur à opérateur, ou d'entité à entité.

En général, de telles transmissions se font téléphoniquement, par exemple lorsque l'un des opérateurs demandera à l'autre d'intervenir, ou d'arrêter son intervention dans la simulation.

Il n'est pas non plus possible d'altérer ou de modifier un message entre opérateurs ou entités simulées, par exemple de façon aléatoire. De telles altérations sont cependant fréquentes dans les messages transmis en situation réelle, dans le cas par exemple du brouillage des communications par l'ennemi.

La présente invention vise à fournir un procédé et un dispositif répondant mieux que ceux antérieurement connus aux exigences de la pratique, notamment en ce qu'elle autorise la transmission de messages de données entre entités simulées et/ou opérateurs utilisant les simulateurs, sans nécessiter de réseaux physiques de messagerie complémentaires, et en ce qu'elle permet de modifier de tels messages, de façon aisée et peu coûteuse à mettre en oeuvre.

Pour ce faire, l'invention part de l'idée d'utiliser le réseau informatique de télécommunication existant entre simulateurs, pour faire transiter les messages entre entités et/ou opérateurs intervenant sur les simulateurs.

Dans ce but l'invention propose notamment un procédé de simulation de données dans un réseau informatique de télécommunication comportant au moins deux simulateurs de données agencés pour échanger entre eux lesdites données en mettant en oeuvre un protocole de communication déterminé entre simulateurs, chaque simulateur simulant au moins en partie, au moins une entité et/ou étant utilisé par un opérateur pour générer les données,
caractérisé en ce qu'on simule dans le réseau informatique au moins un réseau de télécommunication de messages de données entre entités simulées et/ou opérateurs utilisant un simulateur, en encapsulant lesdits messages de données simulées, générés avec des protocoles de type quelconque, dans la même structure de données que celle définie dans le protocole de communication déterminé entre simulateurs.

Dans un mode avantageux de réalisation, on utilise comme structure de données pour encapsuler les messages de données simulées entre entités et/ou opérateurs, un message générique de communication choisi parmi les combinaisons non utilisées de messages de données générés entre simulateurs, avec le protocole de communication déterminé entre simulateurs.

Avantageusement, on simule le fonctionnement d'un réseau de messages de données entre entités simulées et/ou opérateurs utilisant les simulateurs, au moyen d'au moins un simulateur du réseau informatique.

Le message de données simulées est alors, par exemple, modifié ou détruit par le simulateur.

L'invention propose également un dispositif de simulation de données dans un réseau informatique de télécommunication du type ci-dessus défini, propre à mettre en oeuvre le procédé qui vient d'être décrit. Le dispositif est caractérisé en ce qu'il comprend un circuit générateur de messages de données simulées entre entités simulées et/ou entre opérateurs utilisant les simulateurs, dans ledit réseau informatique, ledit circuit générateur comprenant des moyens d'encapsulation desdits messages de données simulées, générés avec des protocoles de type quelconque, dans la même structure de données que celle définie dans le protocole de communication déterminé entre simulateurs.

Avantageusement le circuit générateur comprend un microprocesseur de calcul et des mémoires du type ROM et/ou du type RAM.

L'invention sera mieux comprise à la lecture de la description qui suit d'un mode particulier de réalisation du procédé et du dispositif de l'invention, donnés à titre d'exemple non limitatif.

La description se réfère aux dessins qui l'accompagnent, dans lesquels :
- la figure 1 est un exemple de structure de communication entre entités appartenant à un réseau informatique de communication mettant en oeuvre le procédé et le dispositif selon l'invention. Il s'agit ici d'une structure de défense anti-aérienne, du type hiérarchique.
   Par structure de communication, il faut entendre un ensemble d'entités reliées entre elles par un réseau informatique de communication.
- La figure 2 est un exemple de configuration d'un réseau informatique englobant la structure de la figure 1 et mettant en oeuvre le procédé selon le mode de réalisation de l'invention plus particulièrement décrit ici.
- La figure 3 est un datagramme montrant un mode de réalisation de la procédure d'initialisation des liaisons entre les différents simulateurs, dans le cadre d'une mise en oeuvre du procédé selon l'invention.
- La figure 4 est un organigramme de réception d'une "Unité de Données de Protocole" de communication entre entités, mis en oeuvre dans le mode de réalisation de l'invention plus particulièrement décrit ici.

Par la suite, les "Unités de Données du Protocole" (UDP) seront désignées par l'abréviation anglo-saxonne PDU (Protocol Data Unit), qui est celle utilisée habituellement dans la littérature.

Rappelons qu' une PDU est une portion des données transmises au niveau de la couche application du modèle ISO (niveau 7), entre procédés ou programmes d'application, sur un réseau informatique.

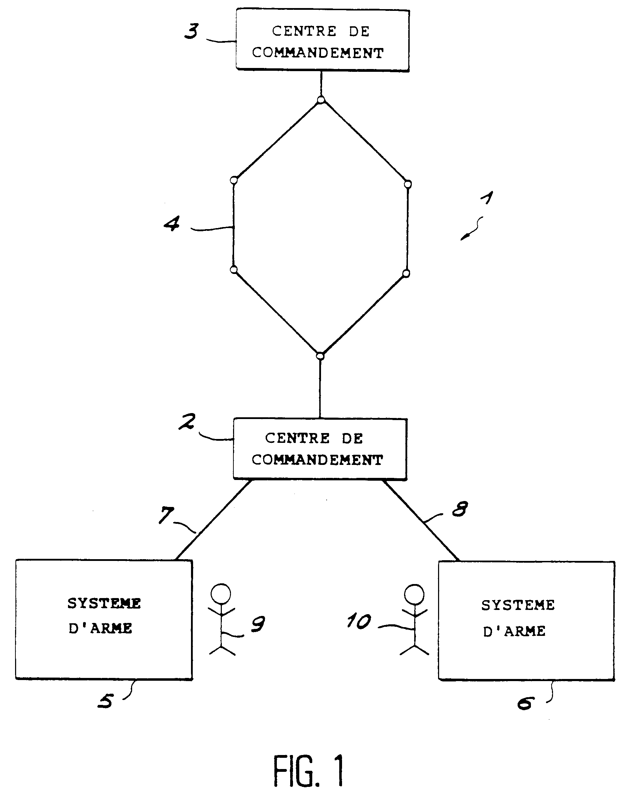

Sur la figure 1 on a représenté un exemple de structure 1 de communication entre entités permettant de faire communiquer des opérateurs dans une structure hiérarchique de défense anti-aérienne en situation hostile.

La structure 1 est composée de deux centres de commandement, 2 et 3, reliés entre eux par un réseau de communication 4, suivant un protocole P₁. Elle comporte deux systèmes d'armes 5 et 6 reliés au centre de commandement 2 par des liaisons hertziennes 7 et 8, suivant un protocole P₂. Les systèmes d'armes 5 et 6 sont respectivement actionnés par les opérateurs 9 et 10.

Le procédé selon l'invention comprend tout d'abord, pour chaque entité, une étape de définition du groupe d'usagers pouvant communiquer directement avec ladite entité, c'est-à-dire sans passer par un tiers.

Pour chaque entité appartenant à ce groupe, on précise ensuite la ou les messageries utilisées pour les communications, ainsi que les supports associés à ces messageries. Il peut s'agir d'un support simple, dit "liaison", ou d'un support simulant un réseau.

Chaque entité, et éventuellement chaque support de communication, est associée à un simulateur ayant pour fonction de simuler le fonctionnement de cette entité ou de ce support.

Les simulateurs sont reliés par le réseau informatique de télécommunication dont ils font partie, et sont identifiés dans ce réseau par des adresses.

La représentation de la structure 1 est alors réalisée par la distribution des adresses du groupe d'usagers (2, 3, 5 et 6), des protocoles de communication utilisés pour les messageries (P₁ et P₂) et éventuellement des adresses de simulateur simulant le support s'il existe. Cette distribution est réalisée pour chaque simulateur.

Le réseau informatique supporte, d'une part la messagerie de la Simulation Interactive Distribuée, et d'autre part, selon l'invention, les messageries utilisées pour les communications entre entités et/ou entre opérateurs intervenant sur ces entités.

Rappelons que, dans les dispositifs connus, les formats de messagerie utilisés pour l'une ou l'autre des entités ne sont pas connus par tous les simulateurs. Les messages entre entités ne peuvent donc être véhiculés par le réseau informatique de télécommunication entre simulateurs.

Ceci est par contre possible, dans le procédé selon l'invention où, dans le mode de réalisation plus particulièrement décrit ici, on encapsule les messages entre entités et/ou opérateurs activant les simulateurs, dans un message générique, composé d'une part d'un "en-tête" et d'autre part d'une zone libre dont le format est connu de tous les simulateurs. Le support du réseau informatique existant va donc pouvoir être utilisé pour véhiculer les messages entre entités.

Dans le mode de réalisation de l'invention plus particulièrement décrit ici, l'en-tête définit plus précisément l'adresse du simulateur de l'entité réceptrice, l'adresse du simulateur du support utilisé pour effectuer cette communication (s'il existe), le type de messageries utilisé, et l'adresse de l'entité émettrice.

La zone libre est la zone dans laquelle est encapsulé le message à transmettre.

Plusieurs techniques peuvent par exemple être utilisées, pour borner cette zone libre.

On peut prévoir, à titre d'exemples non limitatifs :
- une zone fixe et un découpage du message sur plusieurs messages génériques successifs ;
- des caractères de contrôle de fin de message, sous réserve que ces caractères ne risquent pas d'être présents dans les formats des messages à transmettre ;
- une dimension de la zone libre définie dans l'entête.

Comme on l'a vu, deux cas de transmission sont par ailleurs possibles. Le cas où le message générique est transmis directement du simulateur de l'entité émettrice au simulateur de l'entité réceptrice.

Et le cas où la communication est elle-même supportée par une liaison ou un réseau représenté par un simulateur présent dans le réseau informatique de simulation.

Dans ce dernier cas, le message générique soumis par le simulateur de l'entité émettrice est d'abord transmis au simulateur du réseau. Le simulateur du réseau opère alors sur ce message suivant deux modes.
1°/ Dans un premier mode, le message n'est pas modifié, mais il peut être retardé, dupliqué plusieurs fois, détruit, etc.
2°/ Dans un second mode, le message est modifié, par exemple altéré. Seule la zone libre du message générique est modifiable ; les deux modes peuvent par ailleurs se combiner.

Le message générique est ensuite transmis au simulateur de l'entité réceptrice.

Dans le cas où un simulateur de réseau est utilisé, sa présence est connue par le simulateur de l'entité émettrice car l'information a été distribuée précédemment, comme on l'a vu.

La destination est donc gérée dans l'en-tête par l'émetteur, puis éventuellement par le simulateur du réseau qui peut acheminer de nouveau le message vers l'entité réceptrice.

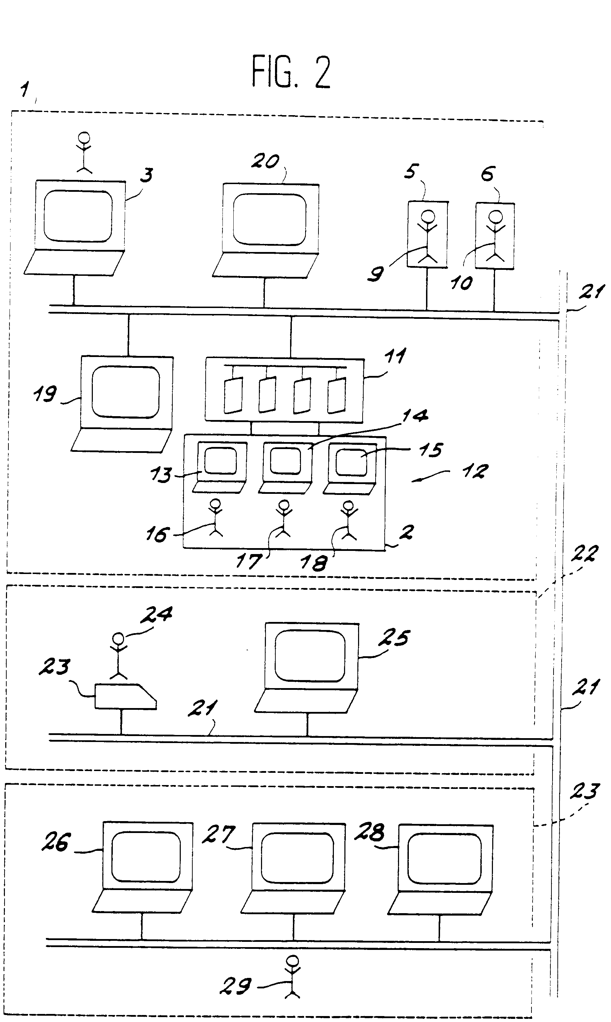

On va maintenant décrire plus précisément un mode de réalisation possible du dispositif selon l'invention, appliqué à la structure de communication de la figure 1, en se référant à la figure 2.

De façon générale, le réseau informatique de la figure 2 est constitué de simulateurs temps réel reliés par une liaison ETHERNET.

La configuration matérielle est à base de stations de travail, par exemple des stations de travail fabriquées par la société américaine SUN MICROSYSTEM connues sous la dénomination SUN SPARC 2, ou de machines spécialisées à base de cartes de la société américaine MOTOROLA commercialisées sous la référence MOTOROLA 88000 et de bus connu sous la dénomination VME (initiales anglosaxonnes de Versa Modul Eurocard).

Les processeurs fonctionnent par exemple avec des systèmes d'exploitation du type connu sous la marque UNIX, intégrant les fonctionnalités temps réel de la norme POSIX 1003.4 (Initiales anglosaxonnes de Portable Operating System Interface under UNIX, c'est-à-dire Interface de système d'exploitation portable sous UNIX).

Les protocoles TCP/IP sont par ailleurs mis en oeuvre pour communiquer des messages d'un simulateur à l'autre.

Ces protocoles sont notamment ceux utilisés dans le cadre du réseau de DARPA (Department Advanced Research Project Agency).

IP est le protocole du réseau connu sous la dénomination INTERNET ; TCP (Transmission Control Protocol) est un protocole de la couche transport de l'ISO, utilisé par la DARPA.

Le réseau de la figure 2 comprend tout d'abord la structure hiérarchisée 1. Comme on l'a déjà vu en partie, celle-ci comporte :
- un simulateur d'environnement 11, pour le centre 12 de commandement réel, interfacé au centre de commandement informatique 2, lui-même comportant plusieurs consoles de simulation 13, 14, 15, commandées respectivement par des opérateurs 16, 17, 18 ;
- le simulateur de centre de commandement 3 (station de travail) ;
- un simulateur de réseau de communication 19 (station de travail) ;
- un simulateur de liaison hertzienne 20 (station de travail) ;
- les deux simulateurs de systèmes d'armes, 5 et 6, constitués par des cabines de simulation dans lesquelles se trouvent les opérateurs 9 et 10.

L'ensemble des simulateurs sont interconnectés entre eux par une liaison du type ETHERNET 21.

La structure 1 interagit avec une menace, représentée par un simulateur 22 de raids aériens, en utilisant le protocole de Simulation Interactive Distribuée (SID) défini dans le projet de standard ci-dessus indiqué [Document (I)] auquel on se reportera pour référence.

Les messages PDU décrits dans le protocole SID peuvent véhiculer des informations concernant :
- des interactions visuelles et électromagnétiques entre les systèmes d'armes et le raid ;
- l'interception du raid par les munitions des systèmes d'armes ;
- la destruction d'éléments de la structure de communication (systèmes d'armes, centres de commandement, réseaux de communication) ;
- le brouillage des liaisons hertziennes.

Par contre les communications dans la structure hiérarchisée 1 ne sont que partiellement définies dans le protocole SID.

Elles relèvent en effet en partie de l'invention et vont être précisées ci-après.

Le simulateur 22 de raid aérien comporte un simulateur d'avion 23, actionné par un opérateur 24, ainsi que d'autres éléments spécifiques du raid simulés par le simulateur 25. Le simulateur 22 est connecté à la structure 1 par la liaison ETHERNET 21.

En complément des simulateurs représentant la structure hiérarchisée 1 et le raid aérien 22, il est prévu un dispositif propre à mettre en oeuvre le procédé selon l'invention.

Dans le mode de réalisation plus particulièrement décrit ici, ce dispositif comporte au moins un poste instructeur 26 connecté au réseau, via la liaison ETHERNET 21, afin d'assurer les fonctions suivantes :
- contrôle des procédures et gestion des procédures d'initialisation qui vont être décrites, et activation des simulateurs dans le réseau informatique (station de travail 27) ;
- visualisation des interactions entre la structure hiérarchisée 1 et la menace à partir des messages (PDU) captés sur le réseau. La visualisation utilise par exemple une représentation cartographique des entités simulées sur une station de supervision 28, avec un symbolisme décrivant les actions en cours ;
- Contrôle des communications du réseau par l'intermédiaire d'une station de travail 29. Cette station capture les messages (PDU) encapsulant un protocole de communication, et représentant le cheminement des processus d'information dans la structure 1 de communication.

On va maintenant décrire plus précisément la mise en oeuvre du procédé et du dispositif selon l'invention.

On réalise tout d'abord une procédure d'initialisation du procédé de simulation. Cette procédure comprend d'une part une procédure d'initialisation connue d'un réseau de Simulation Interactive Distribuée, et d'autre part la procédure d'initialisation de la structure 1 de communication selon l'invention.

La procédure d'initialisation SID est décrite dans le Document (I), aussi ne sera-t-elle que brièvement résumée.

On met en fonctionnement les simulateurs et on charge la base de données (terrain, visuel, etc), puis on soumet un message SID dit "ACTIVATE REQUEST PDU" [voir Document (I)], pour chaque entité à simuler. Cette soumission est effectuée par la station de contrôle réseau 26.

Tous les simulateurs reçoivent le message ; seul le simulateur concerné répond par un message "ACTIVATE RESPONSE PDU". La procédure d'initialisation du réseau SID est terminée quand tous les simulateurs ont accepté l'activation.

Les simulateurs de centre de commandement 2 et 3, de réseau de communication 4, et de liaisons hertziennes 7 et 8, sont activés de la même façon.

Par ailleurs, on procède à l'initialisation de la structure de communication 1. Pour ce faire, on établit une table de communication conformément au tableau N°1 ci-après, en définissant pour chaque entité émettrice, les entités réceptrices, le protocole de communication à utiliser et le support de communication qui lui est associé (réseau ou liaison directe). Les références indiquées dans le tableau correspondent à celles de la figure 1.

L'utilisation de la terminologie anglo-saxonne a été retenue dans le mode de réalisation du procédé de l'invention plus particulièrement décrit ici, pour des raisons d'homogénéïté avec le standard décrit dans le Document (I).

| SENDER | PROTOCOL | LINK | RECEIVER |
|---|---|---|---|
| 5 | P2 | 7 | 2 |
| 6 | P2 | 8 | 2 |
| 2 | P2 | 7 | 5 |
| 2 | P2 | 8 | 6 |
| 2 | P1 | 4 | 3 |
| 3 | P1 | 4 | 2 |

| **TABLEAU N°1** | | | |
|---|---|---|---|
| | | | |

Les champs indiqués dans le tableau N°1 sont les suivants :
- "SENDER" (EMETTEUR) : identification de l'entité émettrice,
- "PROTOCOL" (PROTOCOLE) : identification du protocole de communication,
- "LINK" (LIAISON) : identification de la liaison, c'est-à-dire s'il s'agit d'un réseau ou d'une liaison directe supportant le protocole de communication. Un champ vide (ou nul) indique qu'il n'y a pas de simulateur représentant la liaison, dans le réseau informatique.
- "RECEIVER" (RECEPTEUR) : identification de l'entité réceptrice.

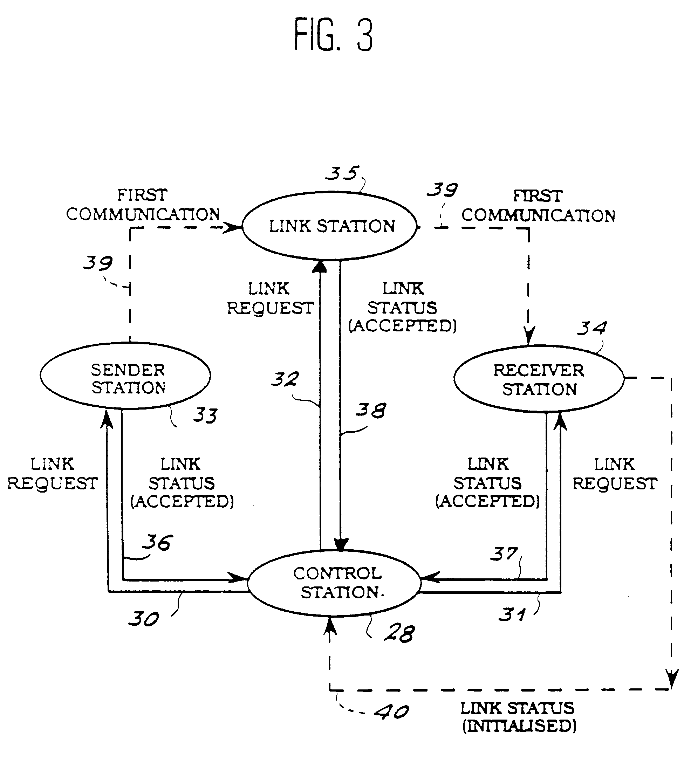

On va maintenant se reporter à la figure 3, représentant le diagramme d'initialisation des liaisons dans le mode de réalisation du procédé de l'invention plus particulièrement décrit ici,

La procédure d'initialisation du réseau SID étant terminée, et tous les simulateurs de la structure hiérarchisée étant actifs, un message "LINK REQUEST PDU" est généré par la station de contrôle réseau 28 (CONTROL STATION), pour chaque liaison décrite dans la table de communication (messages 30, 31 et 32).

Les simulateurs concernés par la liaison émetteur 33 (SENDER STATION), récepteur 34 (RECEIVER STATION) et réseau/liaison 35 (LINK STATION) émettent en retour un message : "LINK STATUS PDU", validant ou non la liaison (messages 36, 37, 38). La liaison est considérée acceptée par la station de contrôle 28 lorsque les trois simulateurs ont accepté la liaison (ou deux seulement si le simulateur réseau/liaison est absent).

La liaison est effectivement initialisée lorsque le récepteur a reçu le message 39 "COMMUNICATION PDU" encapsulant le protocole de communication.

Dans ce cas le simulateur récepteur réemet un message 40 "LINK STATUS PDU" pour confirmer la liaison.

Si les simulateurs changent l'état d'une liaison, un nouveau message "LINK STATUS PDU" est émis.

Les trois messages :
- "LINK REQUEST PDU"
- "LINK STATUS PDU"
- "COMMUNICATION PDU"

sont spécifiques à l'invention telle que décrite dans le mode de réalisation plus particulièrement envisagé ici.

Il convient par ailleurs de remarquer que :
. Une liaison s'arrête dès qu'un des simulateurs concernés est désactivé, ou si une désactivation de la liaison est demandée par la station de contrôle 28.
   La désactivation est alors, par exemple demandée par le même message "LINK REQUEST PDU", le champ MODE gérant la demande ou l'arrêt de la liaison.
   Les simulateurs concernés retournent ensuite un message "LINK STATUS PDU" indiquant leur changement d'état.
. Chaque simulateur gère en local une table de communication (voir Tableau N°1) pour les liaisons dans lesquelles il intervient, ainsi que l'état desdites liaisons. La station de contrôle des communications 28 gère, quant à elle, la table dans sa totalité.

On va maintenant décrire plus avant les messages (PDU) qui sont utilisés dans la présente invention et qui permettent, par extension du protocole de Simulation Interactive Distribuée (SID) décrit dans le Document (I) ci-dessus, de mettre en oeuvre le procédé selon l'invention.

Ces messages ont un en-tête commun aux autres messages de la SID décrits dans le Document (I).

L'en-tête du PDU est donné dans le tableau 2 ci-après. La terminologie anglosaxonne a été retenue pour l'identification des en-têtes pour les tableaux N°2 à N°5, cette terminologie étant usuelle dans le domaine de l'informatique concerné. Une signification en langue française est donnée ci-après :
- Field : champ
- Field size : taille du champ
- Header fields : champs de l'en-tête du message

| FIELD SIZE (bits) | PROTOCOL DATA UNIT HEADER FIELDS | |
|---|---|---|
| 8 | PROTOCOL VERSION | 8 - bit entier naturel |
| 8 | EXERCISE IDENTIFIER | 8 - bit entier naturel |
| 8 | PDU TYPE | 8 - bit enumeration |
| 8 | PADDING | 8 bits inutilisés |

| **TABLEAU N°2** | | |
|---|---|---|
| | | |

L'en-tête contient quatre champs de huit bits, à savoir :
- un champ donnant la version protocole utilisée "PROTOCOL VERSION" : ce champ doit contenir le numéro de version du protocole SID utilisé ;
- un champ d'identificateur d'exercice "EXERCISE IDENTIFIER" : ce champ contient un numéro permettant d'identifier l'exercice ;
- un champ "PDU TYPE" : ce champ indique par un numéro le type le message suivant l'en-tête. Les numéros 0 à 18 étant déjà définis dans le protocole SID, la convention suivante est par exemple utilisée pour son extension, dans le cadre de l'invention :
   . 19 "LINK REQUEST PDU",
   . 20 "LINK STATUS PDU"
   . 21 "COMMUNICATION PDU".
- un champ "PADDING" (champ vide) : ce champ ne sert que pour l'alignement en mots de 32 bits.

Concernant l'identification des entités dans le cadre du protocole SID, on convient par exemple que chaque fois qu'un champ du type "...ENTITY ID" sera défini, ce champ contiendra trois sous-champs de 16 bits, à savoir les sous-champs suivants :
- "SITE" : identification locale du réseau local de simulation, (plusieurs sites peuvent être connectés ensemble).
- "HOST" : identification du calculateur sur lequel est implémentée l'entité simulée (système d'armes, centre de commandement, raids,...)
- "ENTITY" : identification de l'entité représentée par le simulateur.

Les messages "LINK REQUEST PDU", "LINK STATUS PDU" et "COMMUNICATION PDU" vont maintenant être détaillés.

Le message "LINK REQUEST PDU" permet d'activer une liaison virtuelle de communication dans un réseau SID.

Il correspond au tableau 3 suivant :

| Field size (bits) | LINK REQUEST PDU FIELDS | | | | |
|---|---|---|---|---|---|
| 32 | Activate HOST ID | SITE | - 16 bit entier naturel | | |
| | | HOST | - 16 bit entier naturel | | |
| 16 | PADDING | 16 bits inutilisés | | | |
| 48 | SENDER ENTITY ID | SITE | - 16 bits entier naturel | | |
| | | HOST | - 16 bit entier naturel | | |
| | | ENTITY | - 16 bits entier naturel | | |
| 48 | LINK ENTITY ID | SITE | - 16 bit entier naturel | | |
| | | HOST | - 16 bit entier naturel | | |
| | | ENTITY | - 16 bit entier naturel | | |
| 48 | RECEIVER ENTITY ID | SITE | - 16 bit entier naturel | | |
| | | HOST | - 16 bit entier naturel | | |
| | | ENTITY | - 16 bit entier naturel | | |
| 96 | PROTOCOL MARKING | Character SET | - 8 bit enumeration | | |
| | | 11 élément chaîne de caractère | | | |
| 8 | MODE | 8 bit enumeration | | | |
| 24 | PADDING | 24 bit inutilisés | | | |

| TABLEAU N°3 | | | |
|---|---|---|---|
| | | | |

La signification des champs de ce tableau est la suivante :
- "ACTIVATE HOST ID" : identificateur de la station de contrôle ;
- "PADDING" : champ de 16 bits vide ;
- "SENDER ENTITY ID" : identificateur de l'entité émettrice pour la'liaison définie ;
- "LINK ENTITY ID" : identificateur de l'entité représentant le réseau ou la liaison de communication. Lorsque l'entité n'est pas représentée dans le réseau de simulateur, ce champ est mis à zéro ;
- "RECEIVER ENTITY ID" : identificateur de l'entité réceptrice pour la liaison définie ;
- "PROTOCOL MARKING" : ce champ définit le protocole utilisé pour la communication. Il est de 11 caractères, précédé d'un entier de 8 bits précisant le nombre de caractères à prendre en compte. Par convention, le premier caractère commence à gauche ;
- "MODE" : mode activation/désactivation de la liaison, 0 correspond par exemple à une demande de désactivation, et 1 à une demande d'activation ;
- PADDING : champ vide de 24 bits.

Le message "LINK STATUS PDU" correspond quant à lui au tableau n°4 suivant :

| Field size (bits) | LINK STATUS PDU FIELDS | | | | |
|---|---|---|---|---|---|
| 48 | ENTITY ID | SITE | - 16 bit entier naturel | | |
| | | HOST | - 16 bit entier naturel | | |
| | | ENTITY | - 16 bit inutilisés | | |
| 16 | SENDER ENTITY | 16 bit entier naturel | | | |
| 16 | LINK ENTITY | 16 bit entier naturel | | | |
| 16 | RECEIVER ENTITY | 16 bit entier naturel | | | |
| 96 | PROTOCOL MARKING | Character set | - 8 bit enumeration | | |
| | | 11 élément chaîne de caractère | | | |
| 32 | TIME STAMP | 32 bit entier naturel | | | |
| 8 | STATUS | 8 bit enumeration | | | |
| 24 | PADDING | 24 bits inutilisés | | | |

| TABLEAU N°4 | | | |
|---|---|---|---|
| | | | |

La signification des champs de ce tableau est la suivante :
- "ENTITY ID" : Identificateur de l'entité indiquant l'état de sa liaison. Cette entité est l'une des trois entités SENDER, LINK ou RECEIVER ;
- "SENDER ENTITY" : Identification SID de l'entité émettrice ( un seul champ ) ;
- "LINK ENTITY" : Identification SID de l'entité réceptrice ;
- "PROTOCOL MARKING" : Ce champ définit le protocole de la liaison ;
- "TIME STAMP" : Ce champ spécifie la date à laquelle l'état de la liaison a été émis. Dans le mode de réalisation de l'invention décrit ici, appliqué au SID répondant au standard M.S. de DARPA [Document (I)], les conventions de datation sont identiques à celles utilisées pour les messages SID c'est-à-dire :
   . la date représente des unités de temps passées depuis le début de l'heure courante,
   . une heure égale 2³¹ unités, soit une unité = 1.676µs.
- "STATUS" :
   Ce champ comprend les valeurs suivantes :
   0 Status indéfini
   1 Liaison acceptée par l'entité
   2 Liaison initialisée
   3 Liaison refusée - Protocole inconnu
   4 Liaison refusée pour cause non définie
   5 Liaison interrompue par l'entité active
   6 Liaison désactivée
- "PADDING" : Champ non utilisé

Enfin le message "COMMUNICATION PDU" encapsule les messages définis par les protocoles de communication, y compris les procédures d'initialisation définies par ces protocoles. Il correspond au tableau n°5 suivant :

| Field size (bits) | COMMUNICATION PDU FIELDS | | | | |
|---|---|---|---|---|---|
| 48 | ENTITY ID | SITE | - 16 bit entier naturel | | |
| | | HOST | - 16 bit entier naturel | | |
| | | ENTITY | - 16 bit inutilisés | | |
| 48 | SENDER ENTITY ID | SITE | - 16 bits entier naturel | | |
| | | HOST | - 16 bit entier naturel | | |
| | | ENTITY | - 16 bits entier naturel | | |
| 48 | LINK ENTITY ID | SITE | - 16 bit entier naturel | | |
| | | HOST | - 16 bit entier naturel | | |
| | | ENTITY | - 16 bit entier naturel | | |
| 48 | RECEIVER ENTITY ID | SITE | - 16 bit entier naturel | | |
| | | HOST | - 16 bit entier naturel | | |
| | | ENTITY | - 16 bit entier naturel | | |
| 96 | PROTOCOL ID | Character SET | - 8 bit enumeration | | |
| | | 11 élément chaîne de caractère | | | |
| 32 | TIME STAMP | 32 bit entier naturel | | | |
| 16 | SECURITY | 16 bit entier naturel | | | |
| 16 | NUMBER OF BLOCKS (NB) | 16 bit entier inutilisé | | | |
| 1024 | DATA BLOCK (1) | Character SET | - 8 bit enumeration | | |
| | | 127 élément chaîne de caractère | | | |
| 1024 | DATA BLOCK (2 - NB) | (Iterate) | | | |

| TABLEAU N°5 | | | |
|---|---|---|---|
| | | | |

Les champs du tableau n°5 sont définis de la façon suivante :
- "ENTITY" : Identification SID de l'entité ayant généré le message ;
- "SENDER ENTITY" : Identification SID de l'émetteur LINK ENTITY ; identification SID du réseau/liaison ;
- "RECEIVER ENTITY" : Identification SID du récepteur ;

"PROTOCOL MARKING " :
Ce champ définit le protocole de la liaison ;
- "TIME STAMP" : Date d'émission du message encapsulé ;
- "SECURITY" : Ce champ indique le niveau de protection de la communication, à savoir par :
   0 Communication radio non protégée
   1 Communication radio cryptée
   2 Communication par câble
- "NUMBER OF BLOCK" : Le message à encapsuler est découpé en chaînes de caractères multiples de 127. Ce champ représente le nombre de blocs de 127 caractères nécessaires pour contenir le message
- "DATA BLOCK" : Ce champ contient un bloc de 127 caractères, précédé d'un entier de 8 bits précisant le nombre de caractères à prendre en compte à partir du caractère 1.

Ce champ est répété autant de fois qu'indiqué dans le champ "NUMBER OF BLOCK".

On va maintenant décrire ci-après la procédure d'exécution de la simulation mise en oeuvre selon le procédé de l'invention plus particulièrement décrit ici.

La procédure d'exécution comporte la procédure de la Simulation Interactive Distribuée (sID), la procédure d'échange de messages par encapsulation et la procédure de simulation des communications.

La procédure d'exécution de Simulation Interactive Distribuée est décrite dans le Document (I). Elle peut être résumée brièvement de la façon suivante.

Chaque simulateur émet sur le réseau informatique en mode "BROADCAST" un message "ENTITY STATE PDU".

Ce message contient des informations d'aspect et de cinématique (position, attitude, mouvement,...).

Chaque simulateur reconstitue alors localement les informations visuelles et électromagnétiques des autres entités à partir des messages captés sur le réseau.

Les entités interagissent par ailleurs entre elles (ravitaillement, collision destruction, tir, indiscrétion,...) par des messages du type PDU.

L'échange des messages entre entités par encapsulation relève quant à lui de la présente invention.

Dans le mode plus particulièrement décrit ici, chaque simulateur d'une structure hiérarchisée va communiquer un message suivant un protocole de communication, en découpant ce message par bloc de 127 caractères et en insérant les blocs dans un message "COMMUNICATION PDU".

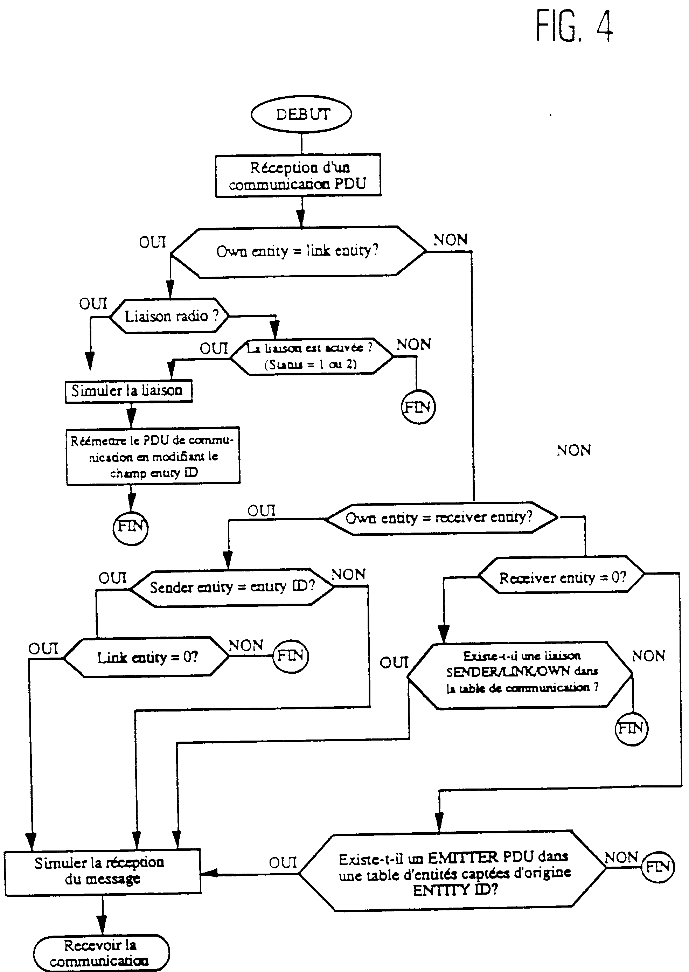

La procédure de réception d'un PDU de communication est décrite ci-après en référence à la figure 4.

Elle est la suivante :
- Dans le cas dit nominal :
on exécute la séquence suivante.
1°/ Le simulateur émetteur encapsule le message à soumettre et précise l'identificateur de l'entité réseau/liaison dans le champ "LINK ENTITY". L'identificateur du récepteur doit alors être précisé lorsque ce message s'adresse à un correspondant particulier. Lorsque la communication s'adresse à toutes les entités reliées physiquement, ou par transmission radiotéléphonique à des entités non nécessairement reliées, l'identification est 0. L'identificateur de l'émetteur doit par contre toujours être précisé.
2°/ Le simulateur réseau/liaison défini dans le champ "LINK ENTITY" accepte le message, simule la liaison comme on le verra ci-après et réemet le message en modifiant le champ "ENTITY ID" par l'identificateur de l'entité réseau/liaison.

Si la liaison est effectuée par radio-téléphone (ou tout système, dit indiscret, qui autorise l'interception par un tiers du message diffusé) un message "EMITTER PDU" précède l'émission du message "COMMUNICATION PDU".
3°/ Le récepteur défini dans le champ "RECEIVER ENTITY" rejette le message ("ENTITY ID" égal à "SENDER ENTITY ID") à moins que le champ "LINK ENTITY ID" soit nul.
   Le même récepteur accepte le second message ("ENTITY ID" égal à "LINK ENTITY ID") émis par le simulateur réseau/liaison. Dans un cas particulier le champ "RECEIVER ENTITY" n'est pas défini (champ égal à zéro) ; les entités ayant une liaison initialisée avec l'entité émettrice suivant le protocole défini acceptent alors le second message.
4°/ Toutes les entités amies ou ennemies appartenant au réseau de simulateurs rejettent le premier message puis soit rejette le second lorsque le simulateur réseau n'a pas généré de message du type "EMITTER PDU", soit accepte le second message lorsqu'un message "EMITTER PDU" est généré.
   Lorsque un message "EMITTER PDU" a été généré le rejet ou non du message "COMMUNICATION PDU" est lié aux caractéristiques de l'entité et aux conditions d'écoute.

- Dans le cas où le simulateur réseau/liaison n'est pas défini :

L'entité émettrice assure les fonctions du simulateur réseau/liaison.

Les modifications à apporter à la séquence précédente (cas dit nominal) sont par ailleurs les suivantes :
1°/ Le champ "LINK ENTITY" est mis à 0.
2°/ Le message "EMITTER PDU" est généré avant le premier message par l'entité émettrice. Il n'y a donc pas de second message.
3°/ Le récepteur accepte le premier message.
4°/ Les autres simulateurs acceptent le premier message si un message ""EMITTER PDU"" a été généré par l'entité émettrice.

En examinant plus particulièrement le cas où on simule une liaison, ce qui est un des modes particulièrement avantageux de l'invention, trois problèmes de transmission peuvent être par exemple récréés :
- brouillage de la liaison ;
- interruption de la liaison
- écoute indiscrète.

Le brouillage peut être simulé par le simulateur réseau/liaison et/ou par les récepteurs.

Une liaison est considérée comme brouillée s'il existe un "EMITTER PDU" généré par une entité brouilleur tel que les caractéristiques d'émission soient compatibles avec les modes de transmission de la liaison (LINK ENTITY) ou soient compatibles avec les caractéristiques d'un récepteur radiophonique ("RECEIVER ENTITY"). Deux cas peuvent se présenter :
- le cas où le simulateur réseau/liaison décode le message encapsulé et simule l'effet du brouillage sur le contenu du message. Le message brouillé est ensuite de nouveau encapsulé avant d'être envoyé pour la seconde fois.
   Dans ce cas l'effet du brouillage est calculé en fonction de la puissance du brouillage aux noeuds du réseau.
- le cas où le simulateur applique les effets du brouillage sur les messages reçus en tenant compte, d'une part de la puissance du brouillage à la réception, et d'autre part de la puissance du signal reçu.

Ces deux cas peuvent être cumulés.

L'interruption d'une liaison peut quant à elle être réalisée si l'émetteur et/ou le récepteur sont détruits, ou si le réseau est partiellement détruit. La simulation du premier cas est évidente. Dans le second cas un calcul de chemin en fonction des mécanismes de routage est effectué pour savoir si la liaison est finalement conservée.

Dans le cas où la liaison n'est plus assurée, un message "LINK STATUS PDU" est émis par le simulateur réseau et le simulateur réseau ne renvoie pas les messages "COMMUNICATION PDU" au récepteur.

Enfin le cas des écoutes indiscrètes peut être traité, puisqu'il est possible pour des entités externes à la structure de communication, de recevoir un message "COMMUNICATION PDU" lorsque le simulateur réseau/liaison a émis un message "EMITTER PDU".

Comme il va de soi et comme il résulte de ce qui précède la présente invention n'est pas limitée aux modes de réalisation plus particulièrement décrit.

Elle en concerne au contraire toutes les variantes et notamment celles où l'application n'est pas militaire mais civile, par exemple pour la gestion et l'apprentissage du comportement d'un réseau de transport civil aérien.

## Revendications

1. Procédé de simulation de données dans un réseau informatique de télécommunication comportant au moins deux simulateurs de données agencés pour échanger entre eux lesdites données en mettant en oeuvre un protocole de communication déterminé, chaque simulateur simulant au moins une entité et/ou étant utilisé par un opérateur pour générer lesdites données,
caractérisé en ce que l'on utilise le réseau informatique pour simuler, dans ce réseau, au moins un réseau de télécommunication de messages de données entre lesdites entités simulées et/ou entre opérateurs utilisant les simulateurs, en encapsulant lesdits messages de données simulés, générés avec des protocoles de type quelconque, dans la même structure de données que celle définie dans le protocole de communication déterminé entre simulateurs.

2. Procédé selon la revendication 1, caractérisé en ce que l'on utilise comme structure de données pour encapsuler lesdits messages de données simulées, un message générique de communication qui est choisi parmi les combinaisons non utilisées de messages de données générés entre simulateurs.

3. Procédé selon l'une quelconque des revendications précédentes, caractérisé en ce que l'on simule le support du réseau de télécommunication de messages de données entre lesdites entités simulées et/ou entre opérateurs utilisant les simulateurs, au moyen d'au moins un simulateur du réseau informatique.

4. Procédé selon la revendication 3, caractérisé en ce que le message de données simulées est modifié ou détruit par le dit simulateur.

5. Procédé selon l'une quelconque des revendications 2 à 4, caractérisé en ce que le message génerique est composé d'un en-tête et d'une zone libre dont le format est connu de tous les simulateurs, l'en-tête définissant l'adresse du simulateur de l'entité réceptrice, l'adresse du simulateur du support utilisé pour effectuer la communication (s'il y a lieu), le type de messageries utilisé, et l'adresse de l'entité émettrice, la zone libre étant la zone dans laquelle est encapsulé le message à transmettre.

6. Procédé selon la revendication 5, caractérisé en ce que l'en tête définit de plus la taille du message encapsulé à communiquer.

7. Procédé selon la revendication 5, caractérisé en ce que la zone libre est une zone fixe de 127 caractères, un découpage du message simule entre entités et/ou entre opérateurs, sur plusieurs messages génériques étant effectué s'il y a lieu.

8. Procédé selon l'une quelconque des revendications 5 à 7, caractérisé en ce que, le protocole entre simulateurs étant le protocole TCP/IP complété du protocole de Simulation Interactive Distribuée SID de DARPA, les messages PDU décrits dans le protocole SID sont agencés pour véhiculer un message "LINK REQUEST PDU" propre à activer une liaison virtuelle de communication dans le réseau SID, un message "LINK STATUS PDU" propre à identifier l'état d'une liaison virtuelle dans ledit réseau SID et un message "COMMUNICATION PDU", propre à encapsuler les messages de données générés avec un protocole de type quelconque, entre entités simulées et/ou opérateurs.

9. Procédé selon la revendication 8, caractérisé en ce que, pour transférer un message simulé entre deux entités et/ou entre opérateurs utilisant les simulateurs on exécute la séquence suivante:
1°/ Le simulateur émetteur encapsule le message à transmettre et précise l'identificateur de l'entité réseau/liaison dans un champ "LINK ENTITY" ;
2°/ Le simulateur réseau/liaison défini dans le champ "LINK ENTITY" accepte le message, simule la liaison et réemet le message en modifiant le champ "ENTITY ID" par l'identificateur de l'entité réseau/liaison ;
3°/ Le récepteur défini dans le champ "RECEIVER ENTITY" rejette le message à moins que le champ "LINK ENTITY ID" soit nul, puis accepte le second message émis par le simulateur réseau/liaison ;
4°/ Toutes les entités amies ou ennemies appartenant au réseau de simulateurs rejettent le premier message puis, soit rejettent le second message lorsque le simulateur réseau n'a pas généré de message du type "EMITTER PDU", soit acceptent ledit message lorsque un message "EMITTER PDU" a été généré.

10. Dispositif de simulation de données dans un réseau informatique de télécommunication comportant au moins deux simulateurs de données agencés pour échanger entre eux lesdites données en mettant en oeuvre un protocole de communication déterminé, chaque simulateur simulant au moins une entité et/ou étant utilisé par un opérateur pour générer lesdites données, ledit dispositif permettant de mettre en oeuvre le procédé selon l'une quelconque des revendications précédentes, caractérisé en ce qu'il comprend un circuit générateur de messages de données simulées entre lesdites entités simulées et/ou entre opérateurs utilisant les simulateurs, dans ledit réseau informatique, après encapsulation desdits messages de données simulés, générés avec des protocoles de type quelconque, dans la même structure de données que celle définie dans le protocole de communication déterminé entre simulateurs.

11. Dispositif selon la revendication 10, caractérisé en ce que la communication est elle-même supportée par une liaison ou un réseau représenté par un simulateur présent dans le réseau informatique de simulation.
